# EUROPEAN PATENT APPLICATION

(11) **EP 1 739 806 A1**
(43) Date of publication of application: **03.01.2007**
(21) Application number: 04726796.8
(22) Date of filing: 09.04.2004
(51) Int. Cl.: H02J 3/14, H02J 3/24

(54) **LOAD INTERRUPTER UPON LOWERING OF FREQUENCY**

(71) Applicant: THE TOKYO ELECTRIC POWER COMPANY INCORPORATED, Tokyo 100-8560 (JP)
(72) Inventor: TSUKITA, Jirou, THE TOKYO ELECTRIC POWER COMPANY, Chiyoda-ku, Tokyo 1008560 (JP); YASUDA, Tadaaki, THE TOKYO ELECTRIC POWER COMPANY, Chiyoda-ku, Tokyo 1008560 (JP); IMAI, Shinichi, THE TOKYO ELECTRIC POWER COMPANY, Chiyoda-ku, Tokyo 1008560 (JP)
(74) Representative: Uchida, Kenji
(86) International application number: PCT/JP2004/005127
(87) International publication number: WO 2005/101607

(57) **Abstract**

An underfrequency load shedding protection system for stably managing a power system by recovering a power system frequency to within a predetermined range when the power system frequency drops. An underfrequency level detection unit judges an underfrequency level of the power system frequency when the power system frequency drops resulting from power generation shortage in the power system and a load shedding unit sequentially sheds loads determined in advance based on a staying time when the power system frequency stays at any one of the underfrequency levels judged by the underfrequency level detection unit and sheds on this occasion more loads quickly when the underfrequency level at which the power system frequency stays is large.

## Description

### Technical Field

The present invention relates to an underfrequency load shedding protection system for stably managing a power system by recovering a power system frequency to within a predetermined range when the power system frequency drops.

### Background Art

In general, a plurality of generators is connected to a power system and power generated by a generator is supplied to a load via a power transmission line. The power system voltage is managed so as to fall within a predetermined range depending on each of the voltage classes of the power transmission line and the power system frequency is also managed so as to fall within a predetermined range. A generator connected to the power system is operated in synchronization with the power system frequency so that the terminal voltage becomes a predetermined voltage.

In such a power system, when loads increase or decrease, the power system voltage and the power system frequency change, therefore, the power system voltage and the power system frequency are regulated so as to fall within a predetermined range by increasing or decreasing the output power of the generator. When it is not possible to maintain the power system frequency within a predetermined range only by regulating the output power of the generator, for example, when the power system frequency drops considerably, part of loads determined in advance are shed and conversely, when the power system frequency increases considerably, the generator is paralleled off the power system to maintain the entire power system frequency within a predetermined range.

Here, load shedding at the time of drop of the power system frequency is performed in such a way as follows: limit values for a plurality of levels are set in advance and when the power system frequency drops below the limit value of a first level, part of loads determined in advance are shed and if the power system frequency further drops, sequentially further part of loads are additionally shed each time the power system frequency drops below the limit value of each level.

However, there may be a case where the power system frequency does not recover to within a predetermined allowable range even if loads are shed sequentially. This occurs when the amount of load to be shed does not coincide with the amount of power generation in short supply for the entire power system. When a power system is cut off from a linkage and becomes an isolated power system, such a phenomenon is likely to occur in the power system of the isolated power system. For example, it is assumed that in a power system the predetermined power system frequency of which is 50 Hz, the limit value of the first level is 48.8 Hz, the limit value of the second level is 48.5 Hz, and the limit value of the third level is 48.0 Hz, and 10% of the entire load of the power system is shed each time each level is reached. In this case, each time the power system frequency drops below the respective limit values 48.8 Hz, 48.5 Hz, and 48.0 Hz of the respective levels, 10% of the load is shed sequentially.

For example, when the amount of generated power in short supply in the entire power system is 27% of the entire load and the power system frequency drops below the limit value of the second level but remains over the limit value of the third level, further load shedding is not performed in a state that 20% of the load is shed, and therefore 7% of the load is still connected in excess. Because of this, there may be a case where the power system frequency does not recover to 50 Hz, which is the predetermined power system frequency.

An object of the present invention is to provide an underfrequency load shedding protection system capable of recovering the power system frequency into a predetermined range by shedding loads in accordance with the recovery degree of the power system frequency when the power system frequency drops resulting from power generation shortage.

### Disclosure of the Invention

An underfrequency load shedding protection system of the present invention is one for stably managing a power system by recovering the power system frequency to within a predetermined range when the power system frequency drops, characterized by comprising an underfrequency level detection unit for judging an underfrequency level of the power system frequency when the power system frequency drops resulting from power generation shortage in the power system and a load shedding unit for sequentially shedding loads determined in advance based on a staying time when the power system frequency stays at any one of the underfrequency levels judged by the underfrequency level detection unit and shedding the more loads quickly on this occasion when the underfrequency level at which the power system frequency stays is large.

It is preferable to set a rate of change of frequency detection unit for judging, when the power system frequency becomes equal to or less than a predetermined value, the rate of change of the power system frequency within a predetermined range equal to or less than the predetermined value and configure so that the load shedding unit sheds the more loads when the rate of change of the power system frequency within the predetermined range judged by the rate of change of frequency detection unit is larger.

Further, a plurality of predetermined ranges is prepared as a predetermined range equal to or less than a predetermined value of the rate of change of frequency detection unit and it is configured so that the rate of change of frequency detection unit judges the rate of change of the power system frequency within each predetermined range and the load shedding unit sheds the more loads when the rate of change of the power system frequency within each predetermined range judged by the rate of change of frequency detection unit is larger.

### Brief Description of the Drawings

Fig. 1 is a system configuration diagram when an underfrequency load shedding protection system according to an embodiment of the present invention is applied to a power system.
Fig. 2 is a block configuration diagram of an underfrequency load shedding protection system for a transformer station A according to a first embodiment of the present invention.
Fig. 3 is a diagram for explaining an amount of load to be shed by the underfrequency load shedding protection system for the transformer station A according to the first embodiment of the present invention in accordance with the underfrequency level at which the power system frequency stays and the staying time when the power system frequency drops resulting from power generation shortage.
Fig. 4 is a diagram for explaining assignment of a load shedding command to loads, which are candidates for load shedding, by the underfrequency load shedding protection system according to the first embodiment of the present invention.
Fig. 5 is a circuit configuration diagram of a load shedding unit for the transformer station A of a load shedding unit in the first embodiment of the present invention.
Fig. 6 is a block configuration diagram of an underfrequency load shedding protection system for the transformer station A according to a second embodiment of the present invention.
Fig. 7 is a diagram for explaining an amount of load to be shed by the underfrequency load shedding protection system according to the first embodiment of the present invention in accordance with the rate of change of the power system frequency when the power system frequency drops resulting from power generation shortage.
Fig. 8 is a diagram for explaining assignment of a load shedding command to loads, which are candidates for load shedding, by the underfrequency load shedding protection system according to the second embodiment of the present invention.
Fig. 9 is a circuit configuration diagram of a load shedding unit for the transformer station A of a load shedding unit in the second embodiment of the present invention.
Fig. 10 is a block configuration diagram of an underfrequency load shedding protection system for the transformer station A according to a third embodiment of the present invention.
Fig. 11 is a diagram for explaining an amount of load to be shed in accordance with the rate of change of the power system frequency when the power system frequency drops resulting from power generation shortage in the third embodiment of the present invention.
Fig. 12 is a diagram for explaining assignment of a load shedding command to loads, which are candidates for load shedding, in the third embodiment of the present invention.
Fig. 13 is a circuit configuration diagram of a load shedding unit for the transformer station A of a load shedding unit in the third embodiment of the present invention.

### Best Modes for Carrying Out the Invention

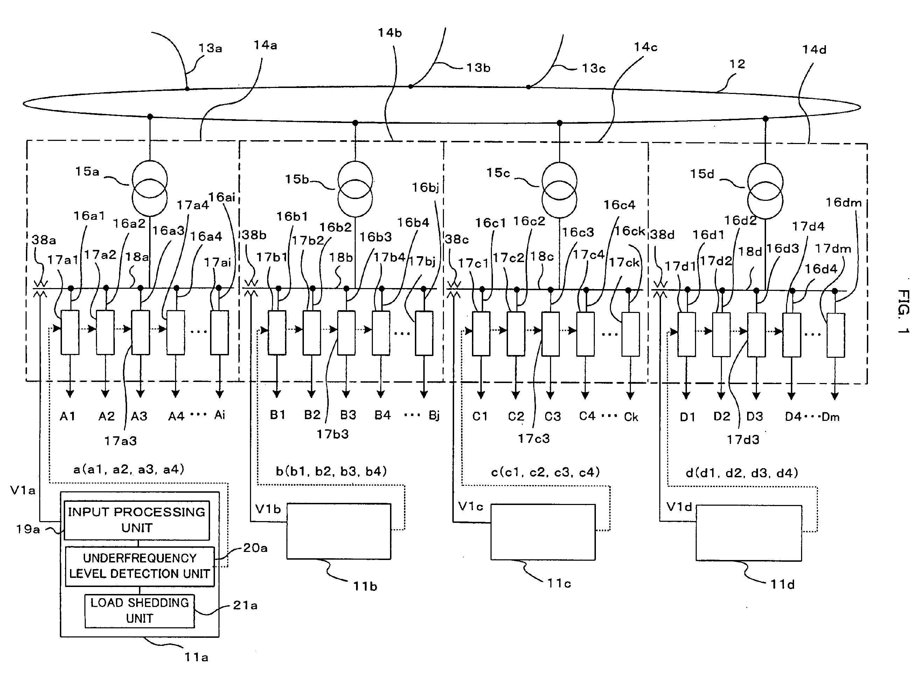

Embodiments of the present invention are described below. Fig. 1 is a system configuration diagram when an underfrequency load shedding protection system according to an embodiment of the present invention is applied to a power system. The underfrequency load shedding protection systems 11a to 11d of the present invention are applied to a power system in which a plurality of bus-bars is linked up with each other by a plurality of transmission networks. Fig. 1 shows a certain power system 12 and the power system 12 is connected to another power system by transmission networks 13a to 13c and a power system like a network is formed as a whole.

To the power system 12, a plurality of generators and a plurality of transformer stations are connected and the power generated by the plurality of generators is supplied to loads via one or a plurality of transformers in the plurality of transformer stations. In Fig. 1, the generator is not shown schematically, and a case is shown, where four transformer stations 14a to 14d are connected and each of the transformer stations 14a to 14d is provided with each of transformers 15a to 15d.

The transformer 15a of the transformer station 14a supplies power to each of loads A1 to Ai from feeders 16a1 to 16ai connected to a bus-bar 18a via circuit breakers 17a1 to 17ai. Similarly, the transformer 15b of the transformer station 14b supplies power to each of loads B1 to Bj from feeders 16b1 to 16bj connected to a bus-bar 18b via circuit breakers 17b1 to 17bj, the transformer 15c of the transformer station 14c supplies power to each of loads C1 to Ck from feeders 16c1 to 16ck connected to a bus-bar 18c via circuit breakers 17c1 to 17ck, and the transformer 15d of the transformer station 14d supplies power to each of loads D1 to Dm from feeders 16d1 to 16dm connected to a bus-bar 18d via circuit breakers 17d1 to 17dm.

Moreover, each of the bus-bars 18a to 18d is provided with each of voltage transformers 38a to 38d and voltages V1a to V1d of the bus-bars 18a to 18d are detected by the voltage transformers 38a to 38d. The voltages V1a to V1d detected by the voltage transformers 38a to 38d are input to the underfrequency load shedding protection systems 11a to 11d respectively.

The underfrequency load shedding protection systems 11 a to 11d stably manage the power system by recovering the power system frequency to within a predetermined range by shedding loads when the power system frequency drops resulting from power generation shortage of the power system 12. Since the underfrequency load shedding protection systems 11a to 11d of each of the transformer stations 14a to 14d have the same configuration, the underfrequency load shedding protection system 11a of the transformer station 14a is described below. The underfrequency load shedding protection system 11a comprises an input processing unit 19a that receives the voltage V1a detected by the voltage transformer 38a and obtains a power system frequency, an underfrequency level detection unit 20a that judges the underfrequency level of the power system frequency based on the power system frequency obtained by the input processing unit 19a, and a load shedding unit 21 a that selects each of the circuit breakers 17a1 to 17ai of the transformer station 14a and outputs a load shedding command a.

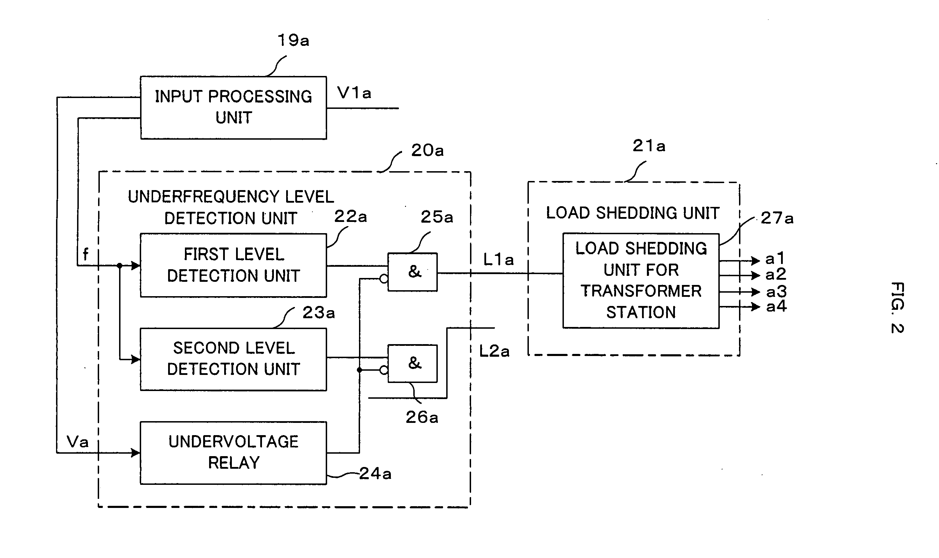

Fig. 2 is a block configuration diagram of the underfrequency load shedding protection system 11 a according to the first embodiment of the present invention. The input processing unit 19a receives the voltage V1a detected by the voltage transformer 38a and obtains a frequency f of the voltage V1a and at the same time, obtains a voltage value Va and outputs it to the underfrequency level detection unit 20a.

The underfrequency level detection unit 20a comprises:
a first level detection unit 22a that judges whether or not the power system frequency f is within a first level range and outputs the logical value "1" when it is within the first level range;
a second level detection unit 23a that judges whether or not the power system frequency f is within a second level range and outputs the logical value "1" when it is within the second level range;
an undervoltage relay 24a that outputs the logical value "1" when the voltage value Va of the voltage V1a is equal to or less than a predetermined value;
a first AND circuit 25a that outputs the logical value "1" when the output of the first level detection unit 22a is the logical value "1" and the output of the undervoltage relay 24a is the logical value "0"; and
a second AND circuit 26a that outputs the logical value "1" when the output of the second level detection unit 23a is the logical value "1" and the output of the undervoltage relay 24a is the logical value "0".

The first level detection unit 22a of the underfrequency level detection unit 20a judges, when the power system frequency f is input from the input processing unit 19a, whether or not the power system frequency f is within the first level range. Similarly, the second level detection unit 23a of the underfrequency level detection unit 20a judges, when the power system frequency f is input from the input processing unit 19a, whether or not the power system frequency f is within the second level range.

For example, in the power system the predetermined power system frequency of which is 50 Hz, if it is assumed that as the first level range, a frequency less than 48.5 Hz is set, as the second level range, a frequency less than 48.0 Hz is set, and the received power system frequency f is 48.4 Hz, then, the received power system frequency f (f = 48.4 Hz) is within the first level range, therefore, the first level detection unit 22a outputs the logical value "1" and the second level detection unit 23a outputs the logical value "0" as a result. Further, when the received power system frequency f is assumed to be 47.8 Hz, the received power system frequency f (f = 47.8 Hz) is within the first level range and the second level range, therefore, the first level detection unit 22a and the second level detection unit 23a output the logical value "1" as a result.

The undervoltage relay 24a outputs the logical value "1" when the voltage value Va of the voltage V1a is equal to or less than a predetermined value. The reason that the undervoltage relay 24a is provided is that it distinguishes the drop phenomenon of the power system frequency f due to the out of step from the drop phenomenon of the power system frequency f due to the power generation shortage of the power system 12 and that it does not perform load shedding in the case of the drop phenomenon of the power system frequency f due to the out of step.

The first AND circuit 25a outputs the logical value "1" when the output of the first level detection unit 22a is the logical value "1" and the output of the undervoltage relay 24a is the logical value "0". In other words, it outputs the logical value "1" when the power system frequency f is within the first level range and not in the case of the drop phenomenon of the power system frequency f due to the out of step. Similarly, the second AND circuit 26a outputs the logical value "1" when the output of the second level detection unit 23a is the logical value "1" and the output of the undervoltage relay 24a is the logical value "0". In other words, it outputs the logical value "1" when the power system frequency f is within the second level range and not in the case of the drop phenomenon of the power system frequency f due to the out of step.

The output signal of the first AND circuit 25a is output as a first level detection signal L1a and the output signal of the second AND circuit 26a is output as a second level detection signal L2a to the load shedding unit 21 a. The load shedding unit 21 a selects each of the circuit breakers 17a1 to 17ai of the transformer station 14a and outputs the load shedding command a. The load shedding unit 21a comprises a load shedding unit for the transformer station A 27a that outputs load shedding commands a1 to a4 to the loads A1 to A4 of the transformer station 14a.

The load shedding unit for the transformer station A 27a receives the first level detection signal L1a and the second level detection signal L2a and when the logical value "1" of the first level detection signal L1a continues for a predetermined time or when the logical value "1" of the second level detection signal L2a continues for a predetermined time, selects the load determined in advance out of the loads A1 to A4 and outputs the load shedding commands a1 to a4 to the circuit breakers 17a1 to 17a4.

Although not shown schematically, a load shedding unit for a transformer station B 27b in a load shedding unit 21b of the transformer station 14b, a load shedding unit for a transformer station C 27c in a load shedding unit 21c of the transformer station 14c, and a load shedding unit for a transformer station D 27d in a load shedding unit 21d of the transformer station 14d similarly receive first level detection signals L1b to L1d and second level detection signals L2b to L2d and when the logical value "1" of the first level detection signals L1b to L1d continues for a predetermined time or when the logical value "1" of the second level detection signals L2b to L2d continues for a predetermined time, select the loads determined in advance out of the loads B1 to B4, the loads C1 to C4, and the loads D1 to D4 and output load shedding commands b1 to b4, load shedding commands c1 to c4, and load shedding commands d1 to d4 to the circuit breakers 17b1 to 17b4, the circuit breakers 17c1 to 17c4, and the circuit breakers 17d1 to 17 d4.

Here, the maximum amount of load to be shed to recover the power system frequency when the power system frequency drops resulting from power generation shortage of the power system 12 is based on the assumption that when the maximum power generation shortage rate of the power system 12 that changes in accordance with the operational condition of the power system and the point of system separation is about 32%, the power system frequency is recovered without fail if 32% of the entire load of the power system is shed. Further, it is also assumed that 4% of the entire load of the power system is shed for each load shedding.

Furthermore, for convenience of explanation, it is also assumed that the loads, which are the candidates for load shedding of the transformer stations 14a to 14d, are the loads A1 to A4, the loads B1 to B4, the loads C1 to C4, and the loads D1 to D4 and are connected to the feeders 16a1 to 16a4, the feeders 16b1 to 16b4, the feeders 16c1 to 16c4, and the feeders 16d1 to 16d4 respectively, and each being 2% of the load. Therefore, the total is 32% of the entire load of the power system.

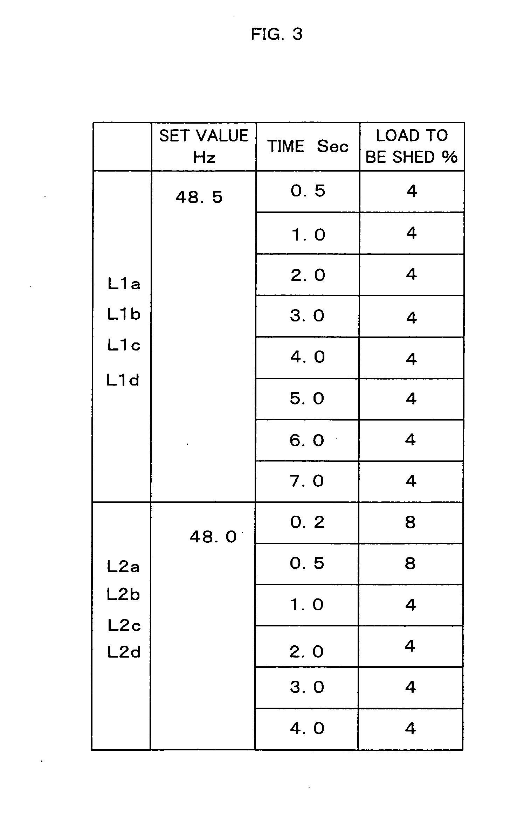

Fig. 3 is a diagram for explaining an amount of load to be shed in accordance with the underfrequency level at which the power system frequency stays and the staying time when the power system frequency drops resulting from power generation shortage under the above-mentioned conditions. Fig. 3 shows a case where as a first level range of first level detection units 22a to 22d, a frequency less than 48.5 Hz is set and as a second level range of second level detection units 23a to 23d, a frequency less than 48.0 Hz is set.

When the power system frequency f comes to fall within the first level range (less than 48.5 Hz), the logical value of the first level signals L1a to L1d becomes "1" and when the power system frequency f comes to fall within the second level range (less than 48.0 Hz), the logical value of the second level signals L2a to L2d also becomes "1". Then, when the power system frequency f stays in the first level range or the second level range for a predetermined time or more, the loads determined in advance based on the staying time are shed sequentially.

For example, when the power system frequency f is within the first level range (less than 48.5 Hz) and above the second level range (less than 48.0 Hz) and stays for a time equal to or more than 0.5 sec., 4% of the load is shed. Then, the power system frequency f still stays in the first level range (less than 48.5 Hz) and above the second level range (less than 48.5 Hz) even after 4% of the load is shed, 4% of the load is shed additionally after 1.0 sec. Similarly, as below, when the power system frequency f still stays in the first level range (less than 48.5 Hz) and above the second level range (less than 48.0 Hz), 4% of the load is shed additionally at every second. Finally, when the power system frequency f stays in the first level range (less than 48.5 Hz) and above the second level range (less than 48.0 Hz) for seven seconds, 32% of the entire load of the power system is shed as a result.

As described above, in the example of the above-mentioned explanation, it is assumed that the power generation shortage rate of the power system is 32% and the drop of the power system frequency can be recovered without fail by shedding 32% of the entire load of the power system, therefore, the load to be shed is assumed to be 32% of the entire load of the power system. If the power generation shortage rate should exceed 32%, the power system frequency cannot be recovered even if 32% of the entire load of the power system is shed, therefore, the assumption of the maximum value of power generation shortage rate of the power system 12 is important in order to maintain a stable operation of the power system.

When the power system frequency f comes to fall within the second level range (less than 48.0 Hz), first, when the power system frequency f stays for a short predetermined time of 0.2 sec. or more, 8% of the load is shed at a time. Then, if the power system frequency f still stays in the second level range (less than 48.0 Hz) even after 8% of the load is shed, 8% of the load is shed additionally after 0.5 sec. Further, if the power system frequency f still stays in the second level range (less than 48.0 Hz), 4% of the load is shed additionally every one sec. Finally, when the power system frequency f stays in the second level range (less than 48.0 Hz) for four sec., 32% of the entire load of the power system is shed as a result. Thus, when the underfrequency level at which the power system frequency stays is large (within the second level range), a large amount of load (8% of the load) is shed quickly (in 0.2 sec.) in the initial time when the power system frequency f stays.

By the way, when the power system frequency f comes to fall within the second level range (less than 48.0 Hz) and then becomes within the first level range (less than 48.5 Hz) and above the second level range (less than 48.0 Hz), load shedding is performed sequentially in the first level range (less than 48.5 Hz). Then, when the power system frequency f becomes above the first level range (less than 48.5 Hz), the load shedding ends.

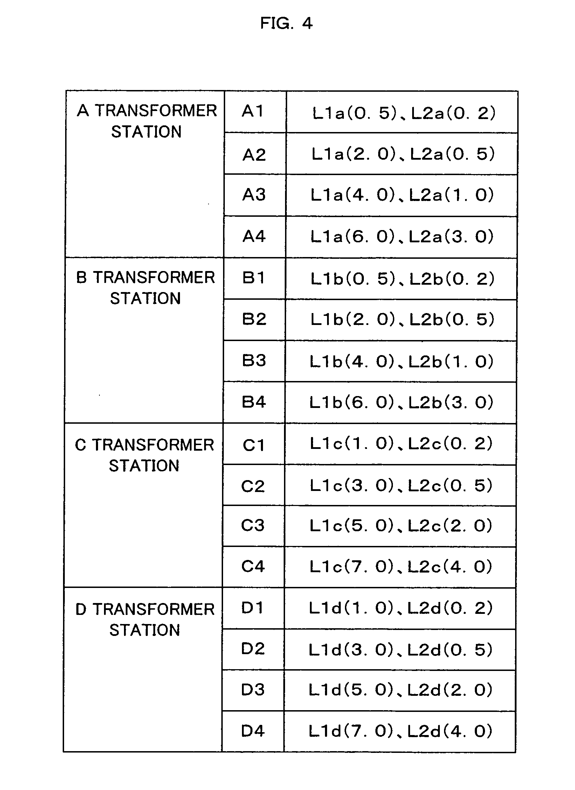

Fig. 4 is an explanatory diagram of assignment of a load shedding command to loads, which are candidates for load shedding. In other words, Fig. 4 is an explanatory diagram of the first level signals L1a to L1d and the second level signals L2a to L2d that have taken time into consideration to the loads A1 to A4, the loads B1 to B4, the loads C1 to C4, and the loads D1 to D4, which are candidates for load shedding of the transformer stations 14a to 14d. For example, L1a (0.5) in Fig. 4 means that a shedding command is output when the first level signal L1a continues for a time equal to or more than 0.5 sec. and L2a (0.2) means that a shedding command is output when the second level signal L2a continues for a time equal to or more than 0.2 sec. Therefore, the load A1 of the transformer station 14a is shed when the first level signal L1a continues for a time equal to or more than 0.5 sec. or the second level signal L2a continues for a time equal to or more than 0.2 sec.

Similarly, as below, the first level signals L1a to L1d and the second level signals L2a to L2d that have taken time into consideration are assigned to the loads A1 to A4, the loads B1 to B4, the loads C1 to C4, and the loads D1 to D4, which are candidates for load shedding of the transformer stations 14a to 14d. As described above, 2% of the load is connected to each of the feeders 16a1 to 16a4, the feeders 16b1 to 16b4, the feeders 16c1 to 16c4, and the feeders 16d1 to 16d4, therefore, the maximum amount of load to be shed in order to recover the power system frequency f is 32%.

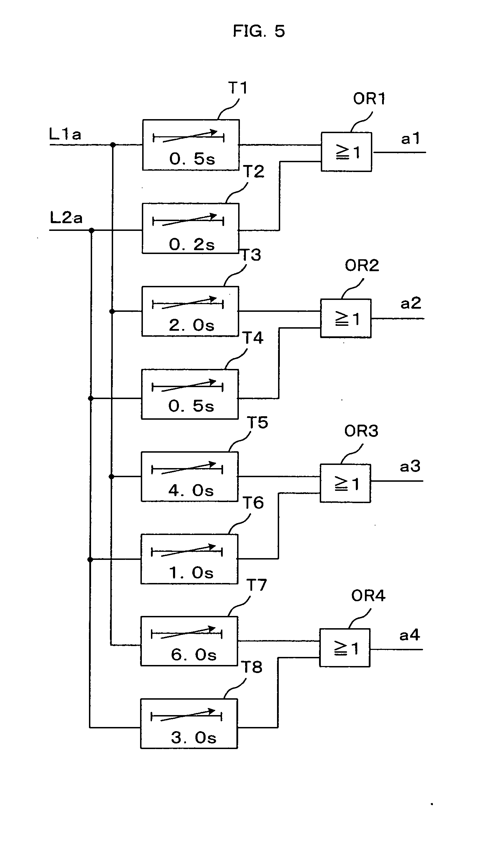

Next, Fig. 5 is a circuit configuration diagram of the load shedding unit for the transformer station A 27a of the load shedding unit in the first embodiment. The load shedding unit for the transformer station A 27a comprises timers T1 to T8 each having a predetermined time and OR circuits OR1 to OR4 for calculating a logical OR of two outputs of the timers T1 to T8. The timers T1 to T8 and the OR circuits OR1 to OR4 realize assignment of the load shedding commands a1 to a4 to the loads, which are the candidates for load shedding shown in Fig. 4.

For example, it is assumed that the power system frequency f comes to fall within the first level range (less than 48.5 Hz) and above the second level range (less than 48.0 Hz) and the first level signal L1a becomes the logical value "1". In this case, if it is assumed that the timers T1, T3, T5, and T7 begin to count the time of its own and when the first level signal L1a continues the logical value "1" for 0.5 sec., the timer T1 outputs the logical value "1" to the OR circuit OR1. Due to this, the load shedding command a1 is output from the OR circuit OR1 to the circuit breaker 17a1 and the load A is shed.

If it is assumed that after the load A1 is shed, the power system frequency f still stays in the first level range (less than 48.5 Hz) and above the second level range (less than 48.0 Hz) and the first level signal L1a continues the logical value "1" for 2.0 sec., the timer T3 outputs the logical value "1" to the OR circuit OR2. Due to this, the load shedding command a2 is output from the OR circuit OR2 to the circuit breaker 17a2 and the load A2 is shed. Similarly, as below, when the first level signal L 1a is assumed to continue the logical value "1" for 4.0 sec., the timer T5 outputs the logical value "1" to the OR circuit OR3 and the load shedding command a3 is output from the OR circuit OR3 to the circuit breaker 17a3 and the load A3 is shed. Further, when the first level signal L1a is assumed to continue the logical value "1" for 6.0 sec., the timer T7 outputs the logical value "1" to the OR circuit OR4 and the load shedding command a4 is output from the OR circuit OR4 to the circuit breaker 17a4 and the load A4 is shed.

Also similarly, when the power system frequency f comes to fall within the second level range (less than 48.0 Hz) and the second level signal L2a becomes the logical value "1", as long as the power system frequency f maintains the second level range (less than 48.0 Hz), the timers T2, T4, T6, and T8 sequentially output the logical value "1" to the OR circuits OR1 to OR4 and the load shedding commands a1 to a4 are output from the OR circuits OR1 to OR4 to the circuit breakers 17a1 to 17a4 and the loads A1 to A4 are shed.

Similarly, the load shedding unit for the transformer station B 27b, the load shedding unit for the transformer station C 27c, and the load shedding unit for the transformer station D 27d also comprise eight timers each having a predetermined time and four OR circuits for calculating a logical OR of two outputs of the eight timers and the eight timers and the four OR circuits realize assignment of the load shedding commands b1 to b4, the load shedding commands c1 to c4, and the load shedding commands d1 to d4 to the loads B1 to B4, the loads C1 to C4, and the loads D1 to D4, which are the candidates for load shedding shown in Fig. 4.

In the above-mentioned explanation, it is assumed that if 32% of the entire load of the power system is shed, the power system frequency f recovers, then 32% of the entire load is shed at maximum when the power system frequency drops resulting from power generation shortage, however, not less than 32% or not more than 32% of the entire load of the power system may be acceptable. It is only necessary to set in accordance with the assumed maximum value of the power generation shortage rate that changes in accordance with the operational conditions and the point of system separation of the power system. Further, the amount of load to be shed is set to 4% of the load for each shedding, however, a smaller amount of load, such as 3% of the load or 2% of the load may be acceptable. Furthermore, the frequency level range is set to be divided into the two levels, that is, the first level range and the second level range, however, further multiple level ranges may be set. In such a case, it is possible to recover the power system frequency in a more detailed manner.

According to the first embodiment, when the power system frequency stays at any of the underfrequency levels judged by the underfrequency level detection units 20a to 20d, the load shedding units 21 a to 21 d sequentially shed the load determined in advance based on the staying time, therefore, the load is shed in accordance with the recovery degree of the power system frequency and it is thus possible to recover the power system frequency to within a predetermined range. Further, when the underfrequency level at which the power system frequency stays is large, a large amount of load is shed quickly in the initial time zone when the power system frequency stays, therefore, it is possible to quickly recover the power system frequency.

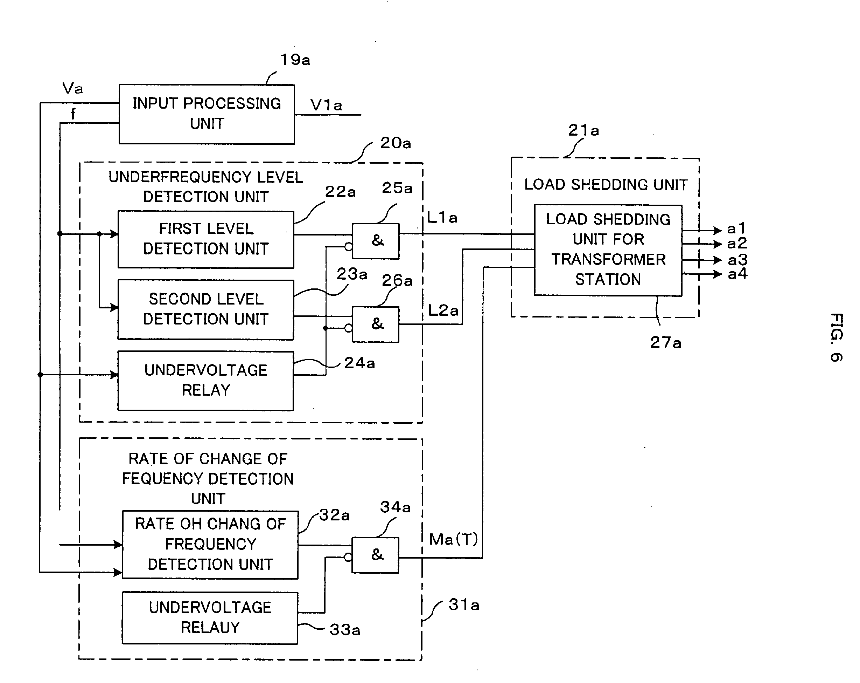

Next, a second embodiment of the present invention is described. Fig. 6 is a block configuration diagram of the underfrequency load shedding protection system 11 a according to the second embodiment of the present invention. In the second embodiment, a rate of change of frequency detection unit 31 a is provided additionally to the first embodiment shown in Fig. 2. The same symbols are attached to the same components as those in Fig. 2 and their explanation is omitted.

The rate of change of frequency detection unit 31a judges, when the power system frequency f becomes a value equal to or less than a predetermined value when the power system frequency drops resulting from power generation shortage, the rate of change of the power system frequency within a predetermined range equal to or less than the predetermined value, and comprises a rate of change of frequency detection unit 32a that judges the rate of change of the power system frequency within the predetermined range equal to or less than the predetermined value, an undervoltage relay 33a that outputs the logical value "1" when the voltage is equal to or less than a predetermined value, and a third AND circuit 34a that outputs the logical value "1" when the output of the rate of change of frequency detection unit 32a is the logical value "1" and the output of the undervoltage relay 33a is the logical value "0".

The rate of change of frequency detection unit 32a measures a time period from the time when the received power system frequency f becomes equal to or less than an upper limit value within a predetermined range and to the time when it drops to a lower limit value within the predetermined range and when the time period becomes equal to or less than any one of a plurality of limit values determined in advance, the rate of change of frequency detection unit outputs an output signal corresponding to the limit value as the logical value "1". In other words, the rate of change of frequency detection unit 32a outputs plural kinds of output signals in accordance with the rate of change corresponding to the plurality of limit values.

For example, in the power system the predetermined power system frequency of which is 50 Hz, if it is assumed that as the upper limit value within the predetermined range, 48.8 Hz is set, as the lower limit value within the predetermined range, 48.0 Hz is set, and as the plurality of limit values, a first limit value 0.4 s, a second limit value 0.5 s, a third limit value 1.0 s, and a fourth limit value 2.0 s are set, and the time period from the time when the received power system frequency f becomes equal to or less than the upper limit value (48.8 Hz) within the predetermined range and to the time when it drops to the lower limit value (48.0 Hz) within the predetermined range is 0.6 s, then, the time is equal to or less than the third limit value 1.0 s but exceeds the second limit value 0.5 s, therefore, an output signal corresponding to the third limit value 1.0 s is output as the logical value "1".

The undervoltage relay 33a outputs the logical value "1" when the voltage value Va of the voltage V1a is equal to or less than a predetermined value. The undervoltage relay 33a is provided in order to distinguish the drop phenomenon of the power system frequency f due to the out of step from the drop phenomenon of the power system frequency f due to power generation shortage of the power system 12 and to prevent load shedding from being performed in the case of the drop phenomenon of the power system frequency f due to the out of step.

The third AND circuit 34a outputs the logical value "1" when the output of the rate of change of frequency detection unit 32a is the logical value "1" and the output of the undervoltage relay 33a is the logical value "0". In other words, the third AND circuit 34a outputs an output signal corresponding to the limit value as the logical value "1" when the rate of change of the power system frequency f becomes equal to or less than any one of the plurality of limit values and not in the case of the drop phenomenon of the power system frequency f due to the out of step.

The output signal of the first AND circuit 25a is output as the first level detection signal L1a, the output signal of the second AND circuit 26a is output as the second level detection signal L2a, and the output signal of the third AND circuit 34a is output as a detection signal for rate of change of frequency Ma (T) to the load shedding unit 21a.

The load shedding unit for the transformer station A 27a of the load shedding unit 2 1 a receives the first level detection signal L1a, the second level detection signal L2a, and the detection signal for rate of change of frequency Ma (T) and when the logical value "1" of the first level detection signal L1a continues for a predetermined time, or when the logical value "1" of the second level detection signal L2a continues for a predetermined time, or when the logical value "1" of the detection signal for rate of change of frequency Ma (T) is input, selects the load determined in advance out of the loads A1 to A4 and outputs the load shedding commands a1 to a4 to the circuit breakers 17a1 to 17a4.

Similarly, the load shedding unit for the transformer station B 27b, the load shedding unit for the transformer station C 27c, and the load shedding unit for the transformer station D 27d receive the first level detection signals L1b to L1d, the second level detection signals L2b to L2d, and detection signals for rate of change of frequency Mb (T) to Md (T) and when any one of the first level detection signals L1b to L1d, the second level detection signals L2b to L2d, and the detection signals for rate of change of frequency Mb (T) to Md (T) becomes the logical signal "1" and the logical value "1" of the first level detection signals L1b to L1d continues for a predetermined time, or when the logical value "1" of the second level detection signals L2b to L2d continues for a predetermined time, or when the logical value "1" of the detection signals for rate of change of frequency Mb (T) to Md (T) is input, select the loads determined in advance out of the loads B 1 to B4, the loads C1 to C4, and the loads D1 to D4 and output the load shedding commands b1 to b4, the load shedding commands c1 to c4, and the load shedding commands d1 to d4 to the circuit breakers 17b1 to 17b4, the circuit breakers 17c 1 to 17c4, and the circuit breakers 17d1 to 17d4.

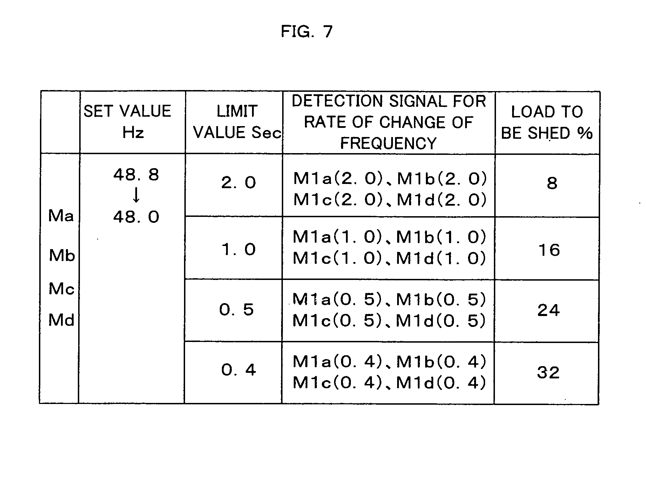

Fig. 7 is an explanatory diagram of the amount of load to be shed in accordance with the rate of change of the power system frequency when the power system frequency drops resulting from power generation shortage. Fig. 7 shows a case where 48.8 Hz is set as the upper limit value within the predetermined range for detecting that the power system frequency becomes equal to or less than the predetermined value and 48.0 Hz is set as the lower limit value within the predetermined range. Fig. 7 also shows a case where four limit values are set as limit values of time during which the power system frequency drops between the upper limit value within the predetermined range and the lower limit value within the predetermined range and 0.4 s is set as a first limit value, 0.5 s is set as a second limit value, 1.0 s is set as a third limit value, and 2.0 s is set as a fourth limit value.

When the power system frequency f becomes equal to or less than the upper limit value (48.8 Hz) within the predetermined range, the rate of change of frequency detection unit 32a begins to count time and monitors whether or not the power system frequency f becomes the lower limit value (48.0 Hz) within the predetermined range. Then, the time required for the power system frequency f to change from the upper limit value (48.8 Hz) within the predetermined range to the lower limit value (48.0 Hz) within the predetermined range is measured and whether or not the required time measured is equal to or less than any one of the first limit value 0.4 s, the second limit value 0.5 s, the third limit value 1.0 s, and the fourth limit value 2.0 s is judged. Then, if the time is equal to or less than any one of the limit values, an output signal corresponding to the limit value is output as the logical value "1".

For example, in a state in which undervoltage relays 33a to 33d have not detected any undervoltage, when the required time is equal to or less than the first limit value 0.4 s, the detection signals for rate of change of frequency Ma (0.4) to Md (0.4) are output from the rate of change of frequency detection units 31a to 33d and 32% of the entire load of the power system is shed by the load shedding units 21a to 21d. This is for recovering the power system frequency f quickly because the rate of change of the power system frequency is large. When the time is equal to or less than the second limit value 0.5 s, the detection signals for rate of change of frequency Ma (0.5) to Md (0.5) are output from the rate of change of frequency detection units 31a to 31d and 24% of the entire load of the power system is shed by the load shedding units 21 a to 21d.

Similarly, as below, when the time is equal to or less than the third limit value 1.0 s, the detection signals for rate of change of frequency Ma (1.0) to Md (1.0) are output from the rate of change of frequency detection units 31a to 31d and 16% of the entire load of the power system is shed by the load shedding units 2 1 a to 2 1 d and when the time is equal to or less than the fourth limit value 2.0 s, the detection signals for rate of change of frequency Ma (2.0) to Md (2.0) are output from the rate of change of frequency detection units 3 1 a to 31d and 8% of the entire load of the power system is shed by the load shedding units 21 a to 21 d. By the way, when the measured time exceeds the fourth limit value 2.0 s (when the rate of change is small), the detection signals for rate of change of frequency Ma (T) to Md (T) are not output, therefore load shedding is not performed by the detection signals for rate of change of frequency. As described above, the larger is the rate of change of the power system frequency within the predetermined range judged by the rate of change of frequency detection unit 31a, the more loads are shed by the load shedding unit 21a and when the rate of change of the power system frequency f is small, load shedding is not performed.

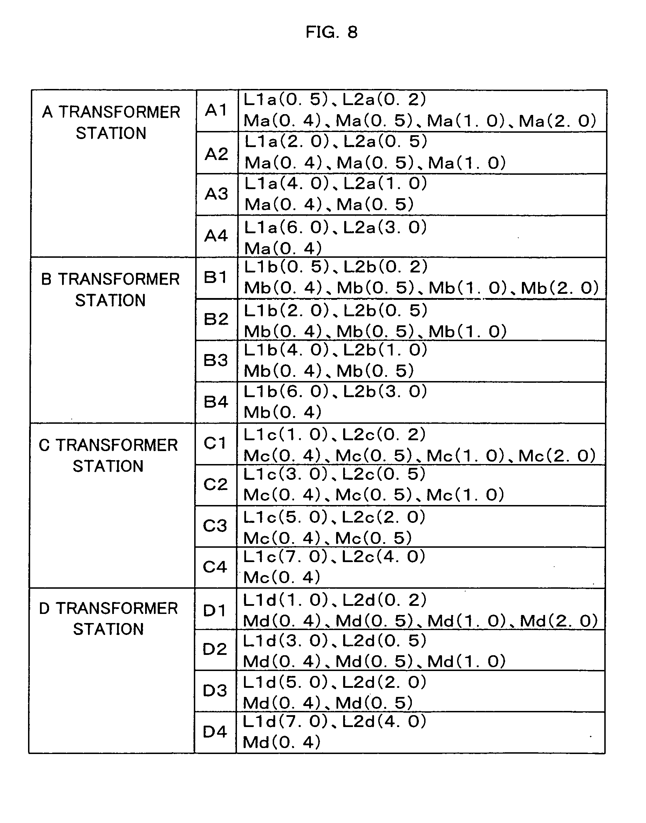

Fig. 8 is an explanatory diagram of assignment of the load shedding command to the loads, which are the candidates for load shedding, in the second embodiment. In comparison to the first embodiment shown in Fig. 4, the detection signals for rate of change of frequency Ma (T) to Md (T) are assigned additionally.

The load A1 of the transformer station 14a is shed when the first level signal L1a continues for 0.5 sec. or more, or when the second level signal L2a continues for 0.2 sec. or more. Further, it is shed by the detection signals for rate of change of frequency Ma (0.4), Ma (0.5), Ma (1.0), and Ma (2.0).

Similarly, as below, to the loads A1 to A4, the loads B1 to B4, the loads C1 to C4, and the loads D1 to D4, which are the candidates for load shedding of the transformer stations 14a to 14d, the first level signals L1a to L1d and the second level signals L2a to L2d that have taken time into consideration, and further, the detection signals for rate of change of frequency Ma (T) to Md (T) are assigned. As described above, to each of the feeders 16a1 to 16a4, the feeders 16b1 to 16b4, the feeders 16c1 to 16c4, and the feeders 16d1 to 16d4, 2% of the load is connected respectively, therefore, the maximum amount of load to be shed to recover the power system frequency is 32%.

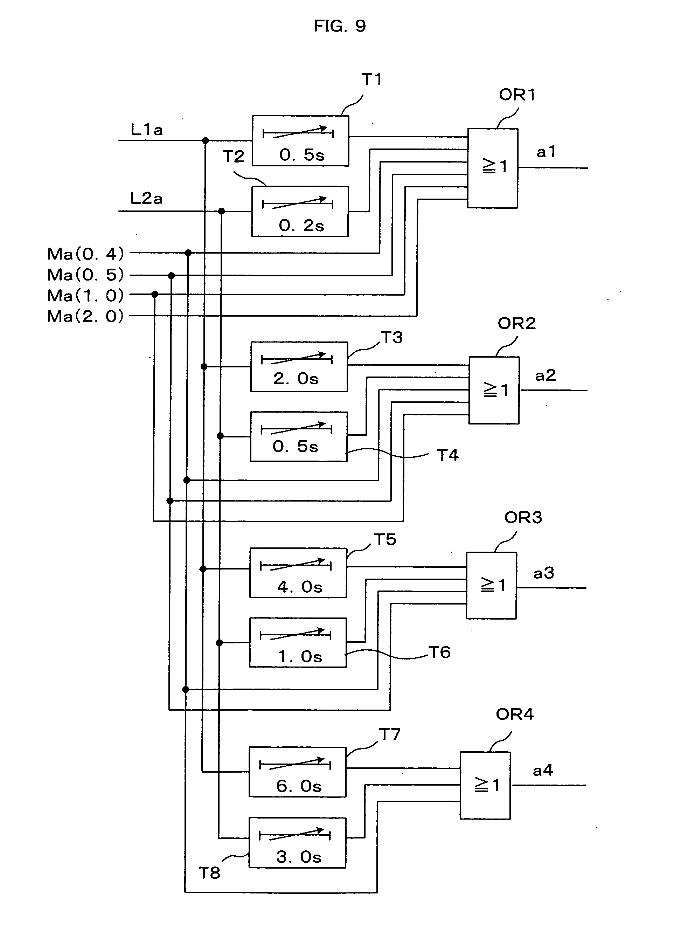

Next, Fig. 9 is a circuit configuration diagram of the load shedding unit for the transformer station A 27a of the load shedding unit 21a in the second embodiment. The load shedding unit for the transformer station A 27a comprises the timers T1 to T8 each having a predetermined time and the OR circuits OR1 to OR4 for calculating a logical OR of a combination of two outputs of the timers T1 to T8 and the detection signals for rate of change of frequency Ma (0.4), Ma (0.5), Ma (1.0), and Ma (2.0). The timers T1 to T8 and the OR circuits OR1 to OR4 realize assignment of the load shedding commands a1 to a4 to the loads, which are the candidates for load shedding shown in Fig. 8.

For example, when the logical value "1" is input by any one of the output signals from the timers T1 and T2, Ma (0.4), Ma (0.5), Ma (1.0), and Ma (2.0), the load shedding command a1 from the OR circuit OR1 is output to the circuit breaker 17a1 and the load A1 is shed. Similarly, when the logical value "1" is input by any one of the output signals from the timers T3 and T4, Ma (0.4), Ma (0.5), and Ma (1.0), the load shedding command a2 from the OR circuit OR2 is output to the circuit breaker 17a2 and the load A2 is shed. When the logical value "1" is input by any one of the output signals from the timers T5 and T6, Ma (0.4), and Ma (0.5), the load shedding command a3 from the OR circuit OR3 is output to the circuit breaker 17a3 and the load A3 is shed. Further, when the logical value "1" is input by any one of the output signals from the times T7 and T8 is input, the load shedding command a4 from the OR circuit OR4 is output to the circuit breaker 17a4 and the load A4 is shed.

Similarly, the load shedding unit for the transformer station B 27b, the load shedding unit for the transformer station C 27c, and the load shedding unit for the transformer station D 27d also comprise the eight timers each having a predetermined time and the four OR circuits for calculating a logical OR of a combination of two outputs of the eight timers and detection signals for rate of change of frequency Mb (0.4) to Mb (2.0), Mc (0.4) to Mc (2.0), and Md (0.4) to Md (2.0) and the eight timers and the four OR circuits realize assignment of the load shedding commands b1 to b4, the load shedding commands c1 to c4, and the load shedding commands d1 to d4 to the loads B1 to B4, the loads C1 to C4, and the loads D1 to D4, which are the candidates for load shedding shown in Fig. 8.

In the above description, the rate of change of frequency detection units 31a to 31d are provided with the undervoltage relays 33a to 33d, however, it may also be possible to share the undervoltage relays 24a to 24d of the underfrequency level detection units 20a to 20d. In other words, it may also be possible to omit the undervoltage relays 33a to 33d of the rate of change of frequency detection units 31a to 31d and input the output signals of the undervoltage relays 24a to 24d of the underfrequency level detection units 20a to 20d for third AND circuits 34a to 34d of the rate of change of frequency detection units 31a to 31d.

According to the second embodiment, in addition to the effects in the first embodiment, it is possible to recover the power system frequency more quickly because the larger the rate of change of the power system frequency is, the more loads are shed quickly if the rate of change of the power system frequency is large when the power system frequency drops resulting from power generation shortage. In other words, it is possible to prevent the power system frequency from staying in a state in which the range of drop is large.

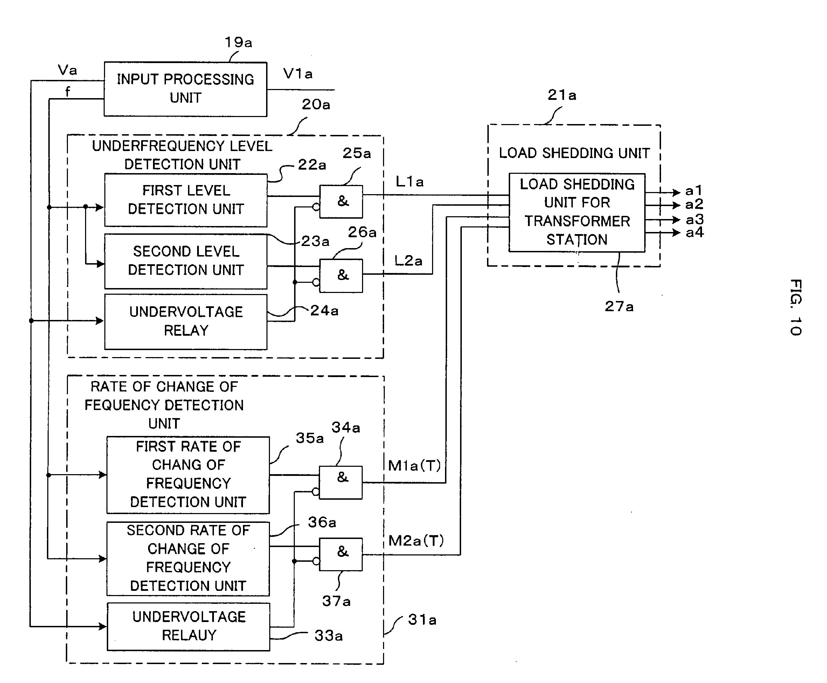

Next, a third embodiment of the present invention is described. Fig. 10 is a block configuration diagram of the underfrequency load shedding protection system 11a according to the third embodiment of the present invention. In the third embodiment, the rate of change of frequency detection unit 31a is provided with two rate of change of frequency detection units (a first rate of change of frequency detection unit 35a and a second rate of change of frequency detection unit 36a) and in accordance with this, two AND circuits (the third AND circuit 34a and a fourth AND circuit 37a) are provided in the second embodiment shown in Fig. 6. Due to this, if the rate of change of the power system frequency is large when the power system frequency drops resulting from power generation shortage, load shedding is performed in two steps to suppress a rise in the power system voltage following load shedding. The same symbols are attached to the same components as those in Fig. 2 and duplicated explanation is omitted.

The rate of change of frequency detection unit 31a in the third embodiment comprises two predetermined ranges (a first predetermined range and a second predetermined range) as a predetermined range equal to or less than the predetermined value of the power system frequency. The first rate of change of frequency detection unit 35a comprises the first predetermined range and the second rate of change of frequency detection unit 36a comprises the second predetermined range. Then, the first rate of change of frequency detection unit 35a judges the rate of change of the power system frequency within the first predetermined range and the second rate of change of frequency detection unit 36a judges the rate of change of the power system frequency within the second predetermined range.

The first rate of change of frequency detection unit 35a measures the time taken by the received power system frequency f to drop through the first predetermined range and if the time is equal to or less than any one of the two or more limit values determined in advance, the first rate of change of frequency detection unit 35a outputs an output signal corresponding to the limit value as the logical value "1". Similarly, the second rate of change of frequency detection unit 36a measures the time taken by the received power system frequency f to drop through the second predetermined range and if the time is equal to or less than any one of the two or more limit values determined in advance, the second rate of change of frequency detection unit 36a outputs an output signal corresponding to the limit value as the logical value "1". In other words, the first rate of change of frequency detection unit 35a and the rate of change of frequency detection unit 36a output plural kinds of output signals in accordance with the rate of change corresponding to the two or more kinds of limit values.

The undervoltage relay 33a outputs the logical value "1" when the power system voltage is equal to or less than a predetermined value. The third AND circuit 34a outputs logical value "1" when the output of the first rate of change of frequency detection unit 35a is the logical value "1" and the output of the undervoltage relay 33a is the logical value "0" and the fourth AND circuit 37a outputs the logical value "1" when the output of the second rate of change of frequency detection unit 36a is the logical value "1" and the output of the undervoltage relay 33a is the logical value "0".

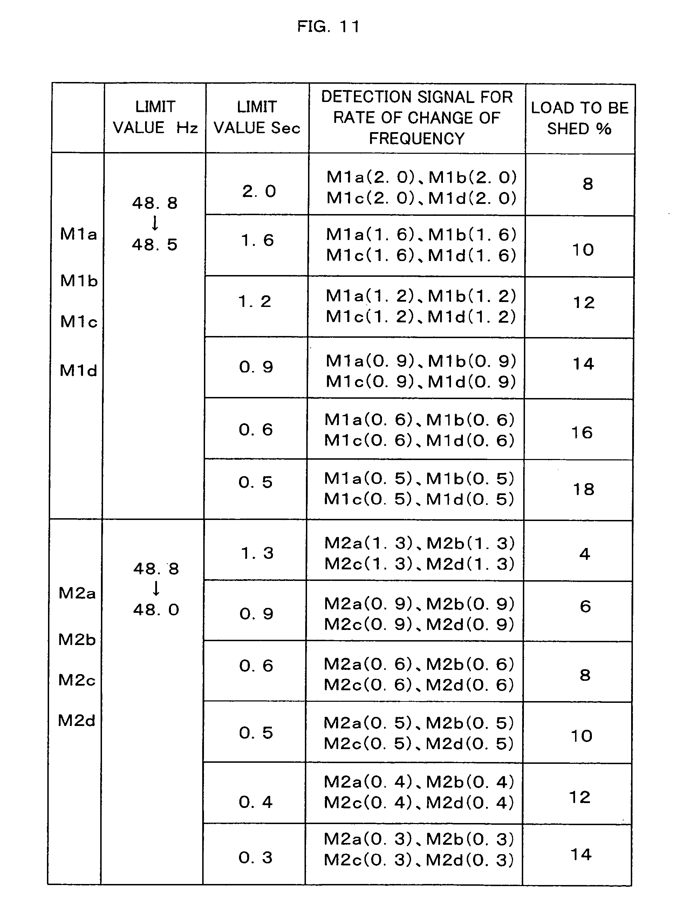

For example, it is assumed that 48.8 Hz to 48.5 Hz is set as a first predetermined range and 48.8 Hz to 48.0 Hz is set as a second predetermined range in the power system the predetermined power system frequency of which is 50 Hz, as shown in Fig. 11. Further, it is also assumed that as a plurality of limit values within the first predetermined range, a first limit value 0.5 s, a second limit value 0.6 s, a third limit value 0.9 s, a fourth limit value 1.2 s, a fifth limit value 1.6 s, and a sixth limit value 2.0 s are set and as a plurality of limit values within the second predetermined range, a first limit value 0.3 s, a second limit value 0.4 s, a third limit value 0.5 s, a fourth limit value 0.6 s, a fifth limit value 0.9 s, and a sixth limit value 1.3 s are set.

Here, it is assumed that the time taken by the power system frequency f to drop through the first predetermined range (48.8 Hz to 48.5 Hz) is 0.8 s and the time taken to drop through the second predetermined range (48.8 Hz to 48.0 Hz) is 1.1 s, then the time taken to drop through the first predetermined range (48.8 Hz to 48.5 Hz) is equal to or less than the third limit value 0.9 s within the first predetermined range and exceeds the second limit value 0.6 s, therefore, first rate of change of frequency detection units 35a to 35d output an output signal corresponding to the third limit value 0.9 s as the logical value "1". Then, in the case of the drop phenomenon of the power system frequency f due to power generation shortage, the output of the undervoltage relays 33a to 33d is the logical value "0", therefore, the first AND circuits 34a to 34d output M1a (0.9) to M1d (0.9) as the first detection signals for rate of change of frequency M1a (T) to M1d (T) corresponding to the third limit value 0.9 s.

On the other hand, the time taken to drop through the second predetermined range (48.8 Hz to 48.0 Hz) is equal to or less than the sixth limit value 1.3 s within the second predetermined range and exceeds the fifth limit value 0.9 s, therefore, second rate of change of frequency detection units 36a to 36d output an output signal corresponding to the sixth limit value 1.3 s as the logical value "1". Then, in the case of the drop phenomenon of the power system frequency f due to power generation shortage, the output of the undervoltage relays 33a to 33d is the logical value "0", therefore, second AND circuits 37a to 37d output M2a (1.3) to M2d (1.3) as the second detection signals for rate of change of frequency M2a (T) to M2d (T) corresponding to the sixth limit value 1.3 s.

Here, when the power system frequency f comes to fall within the first predetermined range (48.8 Hz to 48.5 Hz), the first rate of change of frequency detection units 35a to 35d begin to count the time and monitor whether or not the power system frequency f becomes the lower limit value within the first predetermined range (48.8 Hz to 48.5 Hz). Then, the time required for the power system frequency f to drop to the lower limit value (48.5 Hz) within the first predetermined range is measured and whether or not the measured time is equal to or less than any one of the first limit value 0.5 s, the second limit value 0.6 s, the third limit value 0.9 s, the fourth limit value 1.2 s, the fifth limit value 1.6 s, and the sixth limit value 2.0 s within the first predetermined range is judged. When the time is equal to or less than any one of the limit values, an output signal corresponding to the limit value is output as the logical value "1".

Similarly, when the power system frequency f comes to fall within the second predetermined range (48.8 Hz to 48.0 Hz), the second rate of change of frequency detection units 36a to 36d begin to count the time and monitor whether or not the power system frequency f becomes the lower limit value within the second predetermined range (48.8 Hz to 48.0 Hz). Then, the time required for the power system frequency f to drop to the lower limit value (48.0 Hz) within the second predetermined range is measured and whether or not the measured time is equal to or less than any one of the first limit value 0.3 s, the second limit value 0.4 s, the third limit value 0.5 s, the fourth limit value 0.6 s, the fifth limit value 0.9 s, and the sixth limit value 1.3 s within the second predetermined range is judged. When the time is equal to or less than any one of the limit values, an output signal corresponding to the limit value is output as the logical value "1".

For example, in a state in which the undervoltage relays 33a to 33d have not detected any undervoltage, when the power system frequency f takes 0.5 s to drop through the first predetermined range (48.8 Hz to 48.5 Hz) and takes 0.7 s to drop through the second predetermined range (48.8 Hz to 48.0 Hz), the first detection signals for rate of change of frequency M1a (0.6) to M1d (0.6) are output from the first rate of change of frequency detection units 35a to 35d of the rate of change of frequency detection units 31a to 31d and the second detection signals for rate of change of frequency M2a (0.9) to M2d (0.9) are output from the second rate of change of frequency detection units 36a to 36d. When the first detection signals for rate of change of frequency M1a (0.6) to M1d (0.6) are output from the first rate of change of frequency detection units 35a to 35d of the rate of change of frequency detection units 31a to 31d, the load shedding units 21a to 21d shed 16% of the entire load of the power system and when the second detection signals for rate of change of frequency M2a (0.9) to M2d (0.9) are output from the second rate of change of frequency detection units 36a to 36d of the rate of change of frequency detection units 31a to 31d, the load shedding units 21a to 21d shed 6% of the entire load of the power system.

As described above, when the rate of change of the power system frequency is large and the power system frequency f is recovered quickly, and as a result, 22% of the entire load of the power system is shed, first 16% of the entire load of the power system is shed in the first step and then in the second step, 6% of the entire load of the power system is shed. Due to this, it is made possible to suppress the range of rise in the power system voltage that occurs following load shedding.

In other words, when the load of the power system is shed, the power system voltage rises temporarily in accordance with the amount of shed load. Therefore, if a large amount of load is shed at a time, the rise in the power system voltage is also large, and this is unacceptable from the standpoint of maintaining the power system voltage at a predetermined value. Further, the power system voltage rises in a state in which the power system frequency f has dropped, therefore, for example, there may be a case where an overexcitation protection relay of a generator connected to the power system operates.

In general, a V/F relay that operates when the ratio (V/F) of the generator terminal voltage to the power system frequency exceeds a predetermined value is arranged in a generator as an overexcitation protection relay and when the power system voltage rises in a state in which the power system frequency f has dropped, there may be a case where the V/F relay operates and the generator is paralleled off the power system. When the power system frequency drops resulting from power generation shortage of the entire power system, if the generator is paralleled off the power system although load shedding is performed in order to recover the power system frequency, the power generation shortage of the entire power system is brought about on the contrary, and it becomes difficult to maintain a stable operation state of the power system.

Therefore, it is necessary to suppress a rise in the power system voltage caused by load shedding as much as possible and when the rate of change of the power system frequency is large and the power system frequency f is recovered quickly, the load of the power system is shed in two steps. For example, when the power system frequency drops resulting from power generation shortage and 22% of the entire load of the entire power system is shed as a result, 16% of the load is shed in the first step and 6% of the load is shed in the second step, as described above. First, when 16% of the load is shed in the first step, the power system voltage rises temporarily, however, the rise in the power system voltage is suppressed compared to the case where 22% of the entire load of the entire power system is shed at a time.

Further, the power system voltage that has risen temporarily is regulated so that the terminal voltage of the generator becomes a predetermined value by an automatic voltage regulator AVR that automatically regulates the terminal voltage of a generator, therefore, at the time of load shedding in the second step, the power system frequency exhibits a trend toward recovery. In this state, 6% of the entire load of the entire power system is shed in the second step, the rise in the power system voltage following the load shedding is suppressed.

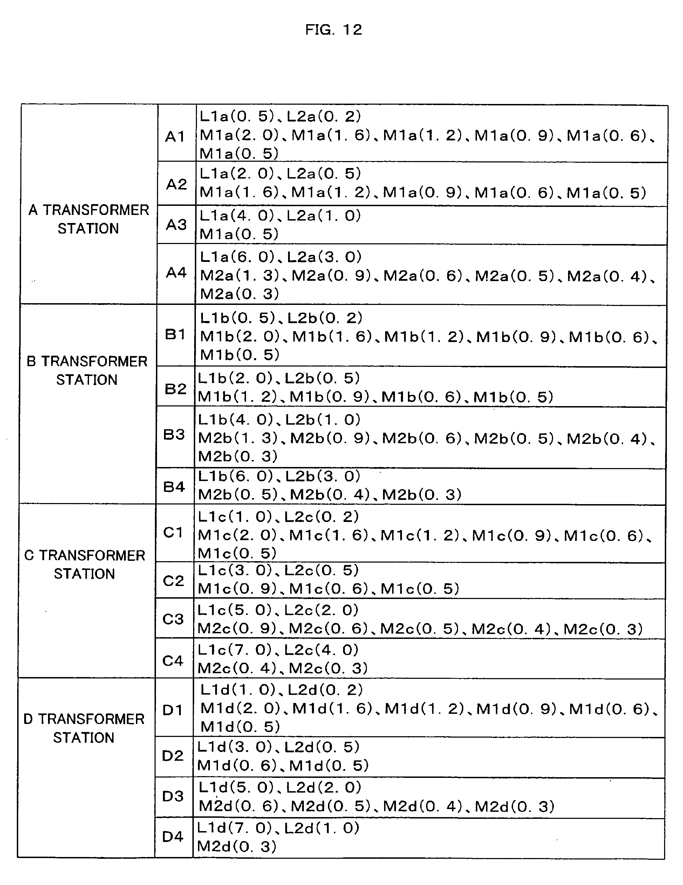

Fig. 12 is an explanatory diagram of assignment of the load shedding command to the loads, which are the candidates for load shedding in the third embodiment. In comparison to the second embodiment shown in Fig. 8, instead of the detection signals for rate of change of frequency Ma (T) to Md (T), the first detection signals for rate of change of frequency M1a (T) to M1d (T) and the second detection signals for rate of change of frequency M2a (T) to M2d (T) are assigned additionally.

The load A1 of the transformer station 14a is shed when the first level signal L1a continues for 0.5 sec. or more, or when the second level signal L2a continues for 0.2 sec. or more. Further, it is shed by the first detection signals for rate of change of frequency M1a (0.5), M1a (0.6), M1a (0.9), M1a (1.2), M1a (1.6), and M1a (2.0).

Similarly, as below, to the loads A1 to A4, the loads B1 to B4, the loads C1 to C4, and the loads D1 to D4, which are the candidates for load shedding of the transformer stations 14a to 14d, the first level signals L1a to L1d and the second level signals L2a to L2d that have taken time into consideration, and further, the first detection signals for rate of change of frequency M1a (T) to M1d (T) and the second detection signals for rate of change of frequency M2a (T) to M2d (T) are assigned. As described above, to each of the feeders 16a1 to 16a4, the feeders 16b1 to 16b4, the feeders 16c1 to 16c4, and the feeders 16d1 to 16d4, 2% of the load is connected respectively, therefore, the maximum amount of load to be shed to recover the power system frequency is 32%.

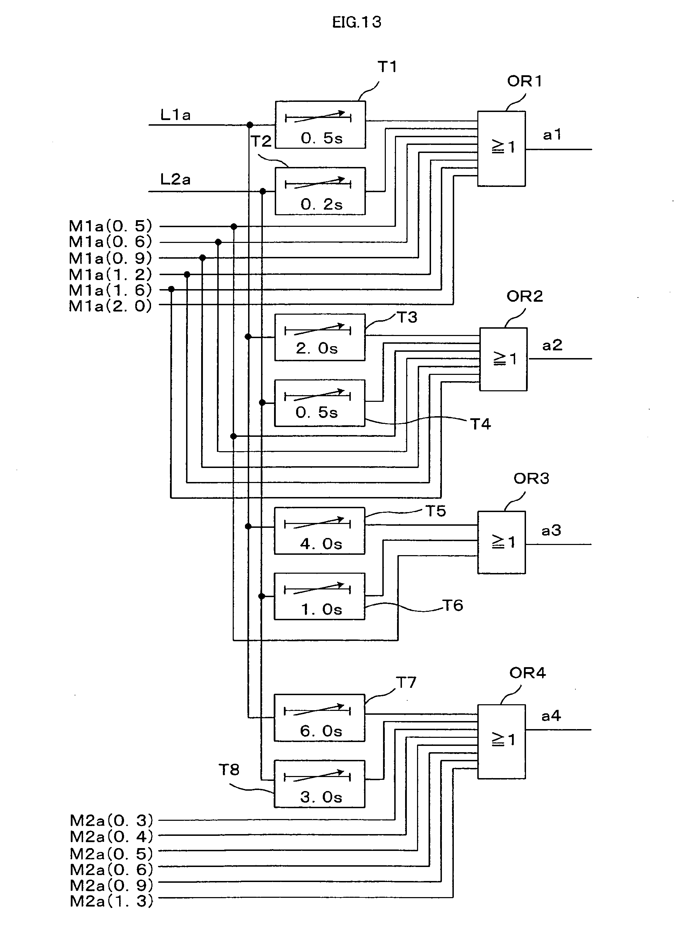

Next, Fig. 13 is a circuit configuration diagram of the load shedding unit for the transformer station A 27a of the load shedding unit in the third embodiment. The load shedding unit for the transformer station A 27a comprises the timers T1 to T8 each having a predetermined time and the OR circuits OR1 to OR4 for calculating a logical OR of a combination of two outputs of the timers T1 to T8 and the first detection signals for rate of change of frequency M1a (0.5), M1a (0.6), M1a (0.9), M1a (1.2), M1a (1.6), and M1a (2.0) and the second detection signals for rate of change of frequency M2a (0.3), M2a (0.4), M2a (0.5), M2a (0.6), M2a (0.9), and M2a (1.3). The timers T1 to T8 and the OR circuits OR1 to OR4 realize assignment of the load shedding commands a1 to a4 to the load, which are the candidates for load shedding shown in Fig. 12.

For example, when the logical value "1" is input by any one of the output signals from the timers T1 and T2, M1a (0.5), M1a (0.6), M1a (0.9), M1a (1.2), M1a (1.6), and M1a (2.0), the load shedding command a1 from the OR circuit OR1 is output to the circuit breaker 17a1 and the load A1 is shed. Similarly, when the logical value "1" is input by any one of the output signals from the timers T3 and T4, M1a (0.5), M1a (0.6), M1a (0.9), M1a (1.2), and M1a (1.6), the load shedding command a2 from the OR circuit OR2 is output to the circuit breaker 17a2 and the load A2 is shed. When the logical value "1" is input by any one of the output signals from the timers T5 and T6, and M1a (0.5), the load shedding command a3 from the OR circuit OR3 is output to the circuit breaker 17a3 and the load A3 is shed. Further, when the logical value "1" is input by any one of the output signals from the times T7 and T8, M2a (0.3), M2a (0.4), M2a (0.5), M2a (0.6), M2a (0.9), and M2a (1.3) is input, the load shedding command a4 from the OR circuit OR4 is output to the circuit breaker 17a4 and the load A4 is shed.

Similarly, the load shedding unit for the transformer station B 27b, the load shedding unit for the transformer station C 27c, and the load shedding unit for the transformer station D 27d comprise the eight timers each having a predetermined time and the four OR circuits for calculating a logical OR of a combination of two outputs of the eight timers, the first detection signals for rate of change of frequency M1b (T) to M1d (T), and the second detection signals for rate of change of frequency M2b (T) to M2d (T), and the eight timers and the four OR circuits realize for each transformer station assignment of the load shedding commands b1 to b4, the load shedding commands c1 to c4, and the load shedding commands d1 to d4 to the loads B1 to B4, the loads C1 to C4, and the loads D1 to D4, respectively, which are the candidates for load shedding shown in Fig. 12

In the above description, a case where two rate of change of frequency detection units are provided is described, however, three or more rate of change of frequency detection units may be provided. In such a case, load shedding is performed in three or more steps, therefore, a rise in the power system voltage following load shedding can be suppressed in a finer manner.

According to the third embodiment, in addition to the effects in the second embodiment, it is possible to suppress a rise in the power system voltage following load shedding because the load shedding is performed in three or more steps if the rate of change of the power system frequency is large when the power system frequency drops resulting from power generation shortage. Therefore, it is possible to prevent the operation of an overexcitation protection relay and a generator from being paralleled off the power system.

### Industrial Applicability

As described above, the underfrequency load shedding protection system of the present invention can be applied to a case where an underfrequency resulting from power generation shortage of a power system is recovered. In other words, load shedding is performed in accordance with recovery degree of the power system frequency, therefore, it is possible to recover the power system frequency to within a predetermined range. Further, when the rate of change of the power system frequency is large, the larger is the rate of change of the power system frequency, the more loads are shed quickly, it is therefore possible to quickly recover the power system frequency. At this time, load shedding is performed in such a manner that a rise in the power system voltage following load shedding is suppressed, it is therefore possible to prevent the operation of an overexcitation protection relay and a generator from being paralleled off the power system.

## Claims

1. An underfrequency load shedding protection system for recovering, when a power system frequency of a power system drops, said power system frequency to within a predetermined range and managing stably said power system, comprising:
an underfrequency level detection unit which judges an underfrequency level of the power system frequency when the power system frequency drops resulting from power generation shortage of the power system; and
a load shedding unit which sequentially sheds the load determined in advance based on a staying time when said power system frequency stays at any one of underfrequency levels judged by said underfrequency level detection unit and which on this occasion sheds the more loads quickly when said underfrequency level at which said power system frequency stays is large.

2. The underfrequency load shedding protection system according to claim 1, wherein
a rate of change of frequency detection unit is provided, which judges, when the power system frequency drops resulting from power generation shortage of the power system and said power system frequency becomes equal to or less than a predetermined value, the rate of change of said power system frequency within a predetermined range equal to or less than the predetermined value; and wherein
the larger the rate of change of the power system frequency within said predetermined range judged by said rate of change of frequency detection unit is, the more loads are shed by said load shedding unit.

3. The underfrequency load shedding protection system according to claim 2, wherein:
said rate of change of frequency detection unit comprises two or more predetermined ranges as a predetermined range equal to or less than said predetermined value;
the rate of change of said power system frequency within each predetermined range is judged; and
the larger the rate of change of the power system frequency within each predetermined range judged by said rate of change of frequency detection unit is, the more loads are shed by said load shedding unit.
